# EUROPEAN PATENT SPECIFICATION

(11) **EP 1 926 288 B1**
(45) Date of publication and mention of the grant of the patent: **16.06.2010**
(21) Application number: 07021468.9
(22) Date of filing: 05.11.2007
(51) Int. Cl.: H04M 1/02

(54) **Rotatable portable terminal with two displays and two input units and method for controlling the same**
Drehbares, tragbares Endgerät mit zwei Anzeigevorrichtungen und zwei Eingabeeinheiten und Steuerverfahren dafür
Terminal portable rotatif avec deux afficheurs et deux unités d'entrée et procédé de commande de celui-ci

(30) Priority: 27.11.2006 KR 20060117753
(43) Date of publication of application: 28.05.2008
(73) Proprietor: Samsung Electronics Co., Ltd, Yeongtong-gu Suwon-si, Gyeonggi-do (KR)
(72) Inventor: Cho, Se Ho, Suwon-si, Gyeonggi-do (KR); Kim, Hee Deog, Suwon-si, Gyeonggi-do (KR)
(74) Representative: Harrison Goddard Foote

(56) References cited:
- EP-A- 1 838 073
- EP-A- 1 848 183
- WO-A-03/021922
- WO-A-2005/083990
- WO-A-2006/022383
- US-A1- 2004 142 734
- US-B1- 6 307 541

## Description

### BACKGROUND OF THE INVENTION

### 1. Field of the Invention

The present invention relates generally to a portable terminal having two input units and two display units and, more particularly, to a portable terminal having input and display units used in a controlled manner according to a hinge unit for rotating bodies to expose or hide the units, as well as a method for controlling the portable terminal.

### 2. Description of the Related Art

As generally known in the art, portable terminals have initially been developed for mobile communication, and their shape was very simple. However, the shape of portable terminals is increasingly diversified so that they become compact and connectable to digital functional modules (e.g. MP3 players, digital cameras) and satisfy various user demands. Portable terminals are commonly classified into bar-type terminals, folder-type terminals, and sliding-type terminals according to their appearance. Portable terminals are becoming thinner and smaller in spite of various functions incorporated inside them. Nevertheless, manufacturers are still accelerating their efforts to reduce the size and weight of portable terminals in line with the current trends towards lighter, thinner, and smaller portable terminals.

Particularly, portable terminals having a broadcast receiver module adapted for digital broadcasting, such as DBM (Digital Multimedia Broadcasting) or DVB (Digital Video Broadcasting), are larger, heavier, and thicker than other types of portable terminals due to the increased size of the display unit and added modules. As a result, these types of portable terminals have failed to satisfy users because of their increased size.

WO2005/083990 A discloses a rotatable phone.

US 2004/142734 A1 discloses a wireless cell phone.

WO 2006/022383 A discloses a portable terminal.

EP-A-1848183 discloses a hinge device for a portable terminal..

EP-A-1838073 discloses a self-cradling type portable terminal.

WO 03/021922 A discloses an electronic device comprising a touch screen with special input functionality.

US-B1-6307541 discloses a method and system for inputting Chinese characters through virtual keyboards to a data processor.

In summary, although various types of portable terminals have been tried, and some have appeared on the market, their design is mainly focused on the size and shape, and they still have some inconveniences.

Therefore, it is requested to overcome the limitations of conventional portable terminals by providing a new type of portable terminal which is smaller and lighter than conventional portable terminals and more convenient.

### SUMMARY OF THE INVENTION

The present invention has been made in view of the above problems, and the present invention provides a new type of portable terminal having two display units and two input units, as well as a method for controlling the same.

Also, the present invention provides a portable terminal having a new shape and better user convenience, as well as a method for controlling the same.

In accordance with an aspect of the present invention, there is provided a portable terminal including a first body having two display units on opposite surfaces, respectively; a second body having two input units on opposite surfaces, respectively; a hinge unit configured as a rotation shaft extending through lateral regions of the first and second bodies, the lateral regions facing each other, in a longitudinal direction of the first body so as to rotatably connect the first and second bodies; a rotation detector for detecting rotation of the hinge unit; and a controller for activating one of the input units facing the same direction of an activated one of the display units and locking the other input unit facing in a different direction based on an output from the rotation detector.

In accordance with another aspect of the present invention, there is provided a method for controlling a portable terminal incorporating a first body having two display units on opposite surfaces, respectively, a second body having two input units on opposite surfaces, respectively, and a hinge unit configured as a rotation shaft extending through lateral regions of the first and second bodies, the lateral surfaces facing each other, in a longitudinal direction of the first body so as to rotatably connect the first and second bodies, the method including the steps of identifying a type of an executed application; activating one of the display units and deactivating the other display unit according to the identified type of the application; and unlocking one of the input units exposed on the same surface of the activated display unit and locking the other input unit according to a rotation condition of the hinge unit.

In certain embodiments the controller is adapted to receive a request for a character input mode while the first display unit is activated and the first input unit is unlocked and convert an input to the first input unit into a character assigned to a sensor at a corresponding location so that the character is input.

In certain embodiments, the method further comprises: monitoring a request for a character input mode while the first display unit is activated and the first input unit is unlocked; and switching the first input unit from a navigation key mode to a character input key mode at a. request for the character input mode so that, based on an input to the first input unit, a character assigned to a sensor at a corresponding location is input.

### BRIEF DESCRIPTION OF THE DRAWINGS

The above and other aspects, features and advantages of the present invention will be more apparent from the following detailed description in conjunction with the accompanying drawings, in which:
FiGs. 1A to 1D show the contour of a portable terminal according to an embodiment of the present invention;
FIG. 2 shows the diagram of a portable terminal according to an embodiment of the present invention;
FIG. 3 shows sensors arranged to implement 3x4 keys on a touchpad according to an embodiment of the present invention;
FIG. 4 shows how to input characters with a touchpad according to an embodiment of the present invention;
FIGs. 5A and 5B show how to input characters according to an embodiment of the present invention;
FIG. 6 shows how to control functions by using a keypad according to an embodiment of the present invention;
FIG. 7 is a flowchart showing a method for controlling a portable terminal according to an embodiment of the present invention; and
FIG. 8 is a flowchart showing a method for controlling a portable terminal according to another embodiment of the present invention.

### DETAILED DESCRIPTION OF EXEMPLARY EMBODIMENTS

Hereinafter, exemplary embodiments of the present invention are described in detail with reference to the accompanying drawings. The same reference symbols identify the same or corresponding elements in the drawings. Detailed descriptions of constructions or processes known in the art may be omitted to avoid obscuring the invention in unnecessary detail.

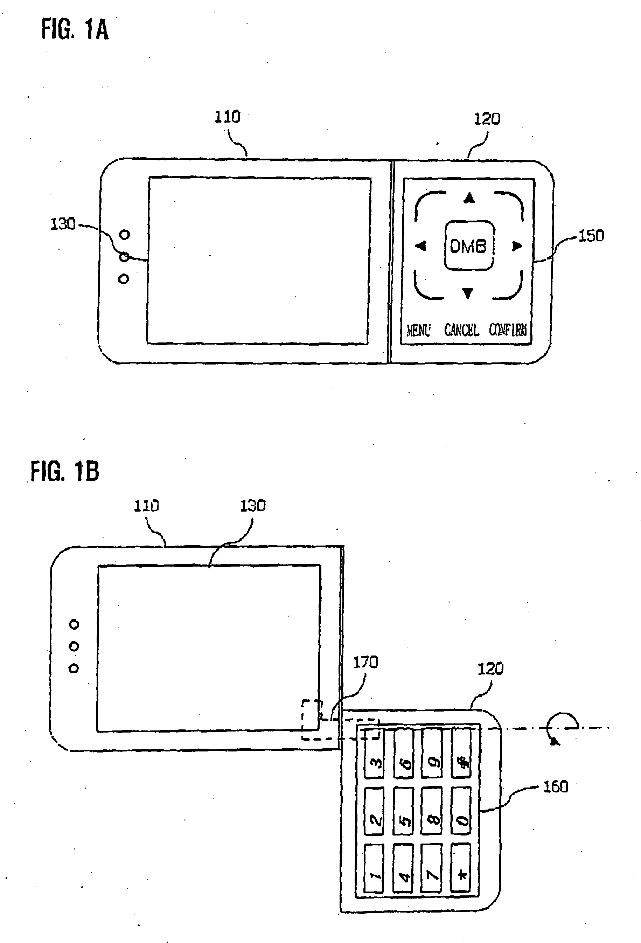

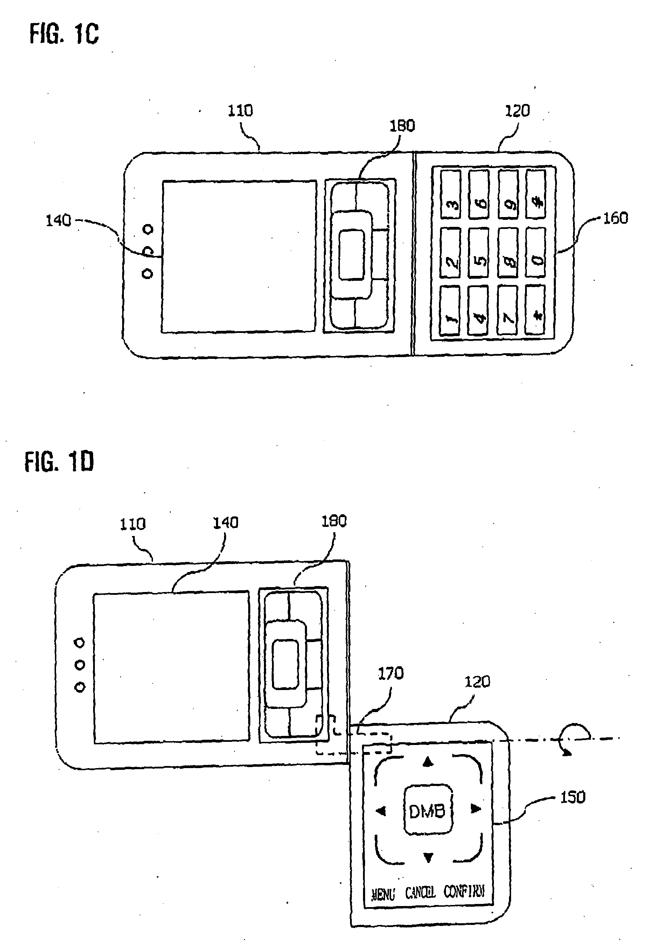

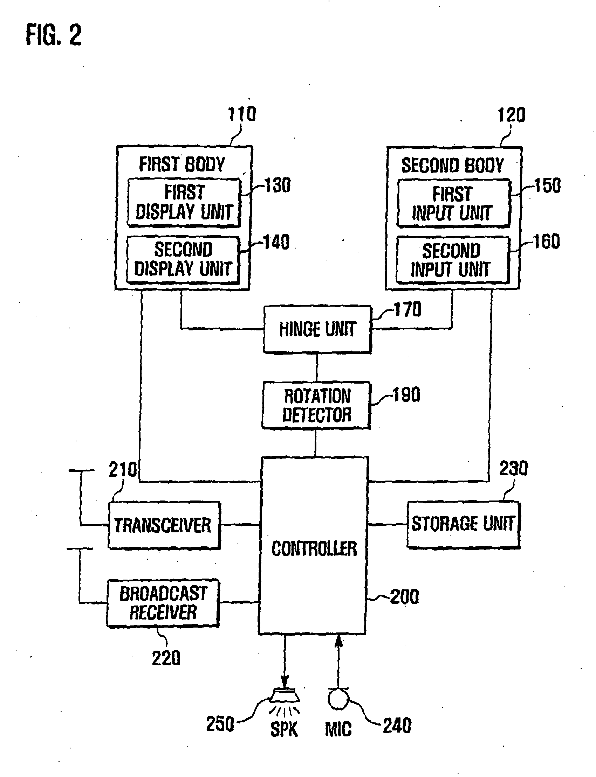

FIGs. 1A to 1D show the contour of a portable terminal according to an embodiment of the present invention; and FIG. 2 shows the diagram of the portable terminal shown in FIGs. 1A to 1D. It will be assumed in the following description that, when the first and second bodies 110 and 120 are positioned with their lateral surfaces facing each other as shown in FIG. 1A or 1C, they are in a non-rotated condition; and, when one of the first and second bodies 110 and 120 is rotated and when they are positioned with their lateral surfaces facing in different directions as shown in FIG. 1B or 1D, they are in a rotated condition.

Referring to FIGs. 1A to 1D and FIG. 2, the portable terminal includes a first body 110 having two display units 130 and 140 on opposite surfaces, respectively; a second body 120 having two input units 150 and 160 on opposite surfaces, respectively; a hinge unit 170 configured as a rotation shaft extending through lateral regions of the first and second bodies 110 and 120, which face each other, in the longitudinal direction of the first body 110 so as to rotatably connect the first and second bodies 110 and 120; a rotation detector 190 for detecting the rotation of the hinge unit 170; and a controller 200 for activating one of the input units that faces in the same direction as the activated one of the display units 130 and 140, based on an output from the rotation detector 190, and converting the other input unit into a locked condition.

The portable terminal may further include a transceiver 210 for transmitting/receiving radio frequency signals, a broadcast receiver 220 for receiving digital broadcasting signals; a storage unit 230 for storing data; a voice input unit 240 for inputting voice signals; and an audio output unit 250 for outputting audio signals.

Although not shown in the drawings, the portable terminal may selectively include units incorporating additional functions, particularly a storage medium insertion unit, into which an external storage medium (e.g. memory card) is inserted for data storage; a camera module; a connection jack for data exchange with an external digital device; a charging jack; a battery for power supply; and a digital sound source playback module (e.g. MP3 module). Those skilled in the art can easily understand that, although the adaptation of portable terminals to the current trends towards convergence of digital devices is too diversified to be described herein in detail, the portable terminal according to the present invention can incorporate any equivalent of the above-mentioned units.

One of the two display units 130 and 140 may be a first display unit 130 for displaying multimedia applications, including digital broadcasts, moving images, and wireless Internet interface, on the screen in a multimedia mode. The first display unit 130 may be a QVGA (Quarter Video Graphics Array)-grade LCD (Liquid Crystal Display) supporting a horizontal view function.

The other of the two display units 130 and 140 may be a second display unit 140 for displaying applications other than the multimedia applications (e.g. information regarding menu selection, date, and time) on the screen of the second display unit 140 and for displaying received text messages on the screen in a phone mode. The second display unit 140 may be a QCIF (Quarter Common Intermediate Format)-grade LCD having a screen size smaller than that of the first display unit 130.

Those skilled in the art can easily understand that, although the multimedia and phone modes have been assumed for the first and second display units 130 and 140, respectively, the present invention is not limited to that assumption. For example, the first and second display units 130 and 140 may display applications in the phone and multimedia modes, respectively, under the control of the user (e.g. based on a separate input).

The first body 110 may have a third input unit 180 positioned on the same surface as the second display unit 140 is positioned so as to provide function keys (e.g. menu keys, direction keys).

The rotation detector 190 detects the rotation of the hinge unit 170 and outputs a corresponding signal. Particularly, when rotation of the first or second body 110 or 120 is followed by rotation of the hinge unit 170 in a first direction, the rotation detector 190 outputs a rotation signal informing that the first or second body 110 or 120 is in a rotated condition. When rotation of the first or second body 110 or 120 is followed by rotation of the hinge unit 170 in a second direction which is opposite to the first direction, the rotation detector 190 outputs a non-rotation signal informing that the first or second body 110 or 120 is in a non-rotated condition.

Depending on the selected application mode, the controller 200 activates one of the first and second display units 130 and 140 and deactivates the other. Particularly, when the multimedia mode is selected, the controller 200 activates the first display unit 130 and deactivates the second display unit 140. When the phone mode is selected, the controller 200 activates the second display unit 140 and deactivates the first display unit 130. For example, if a menu for watching digital broadcasts is selected while the second display unit 140 is activated, the controller 200 deactivates the second display unit 140 and activates the first display unit 130 so that the digital broadcasts are displayed on the screen of the first display unit 130. In this case, the controller 200 may control the second display unit 140 so as to display a message informing the user of the screen conversion (e.g. "SCREEN SWITCHING"). Although not shown in the drawings, the controller 200 may switch the activation/deactivation of the first and second display units 130 and 140 based on an input from an external input key (e.g. lateral key).

The controller 200 converts one of the two input units 150 and 160, which is exposed on the same surface as the activated display unit, into an unlocked (activated) condition, and converts the other input unit into a locked (deactivated) condition. As such, the controller 200 can switch the locked/unlocked condition of the input units 150 and 160 based on signals from the rotation detector 190.

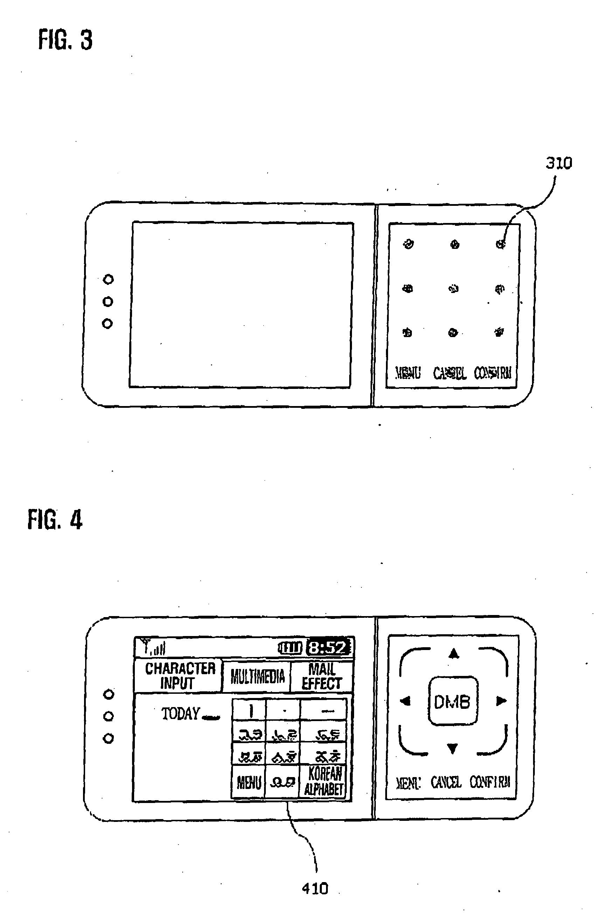

One of the two input units 150 and 160 may be a first input unit 150 comprising a touchpad, which may have sensors for sensing the user's touch. The sensors may be arranged in a 3x4 matrix type while corresponding to respective pointers 310, as shown in FIG. 3. The first input unit 150 may be adapted to control the multimedia mode of the first display unit 130. FIG. 3 shows sensors arranged so as to implement 3x4 keys on a touchpad according to an embodiment of the present invention.

The other of the two input units 150 and 160 may be a second input unit 160 comprising a keypad, which may have key buttons for inputting numerals, Roman alphabet, Korean alphabet, etc. The second input unit 160 may be adapted to control the phone mode of the second display unit 140.

If the first display unit 130 is activated while the first or second body 110 or 120 is in a non-rotated condition (i.e. a non-rotation signal is received from the rotation detector 170) as shown in FIG. 1A, the controller 200 unlocks the first input unit 150 and locks the second input unit 160. In this case, the first input unit 150 is used as a navigation key in a multimedia mode for watching digital broadcasts, taking images with a camera, or playing MP3s, but not for inputting characters.

When a situation requesting character input occurs (e.g. when a search window is activated or when a message composition mode is selected) while the first display unit 130 and the first input unit 150 are activated, the controller 200 enables the input of characters corresponding to those of the sensors of the first input unit 150, which have sensed a touch.

The controller 200 may display a key map for aiding character input. As shown in FIG. 4, the first display unit 130 may display a key map 410 showing the arrangement of keys of the first input unit 150 together with characters assigned to them so that, when one of the sensors of the first input unit 150 has sensed a touch, the corresponding character on the key map is inputted. In this manner, the user can easily input characters by the first input unit 150 with reference to the key map 410. FIG 4 shows how to input characters with a touchpad according to an embodiment of the present invention. As shown, the key map 410 consists of the same array of keys as that of the sensors of the first input unit 150 (i.e. 3x4 matrix), and may have the same character array as that of the keypad of the second input unit 160.

The controller 200 may hide or remove the key map 410 after it has been displayed for a predetermined period of time.

The controller 200 may display or remove the key map 410 based on a key input from an external input key, such as a side key (not shown).

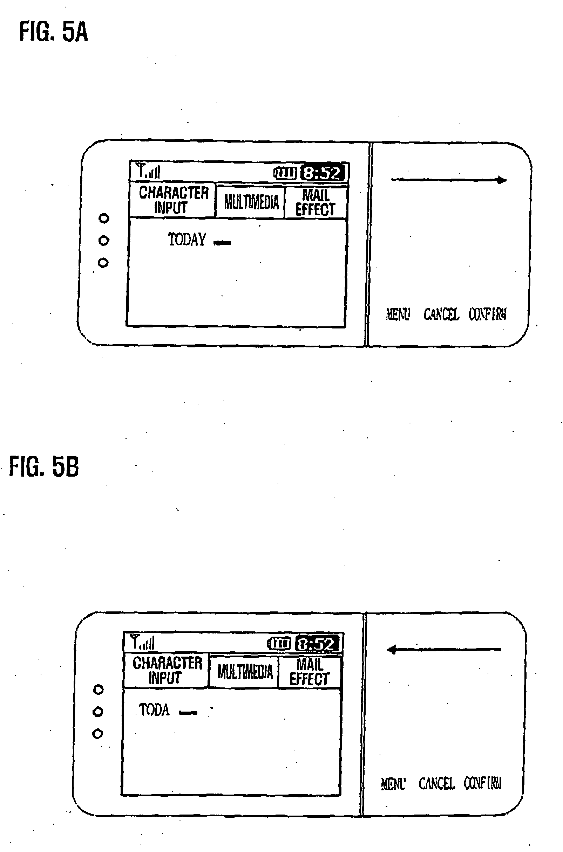

When sensors on the same row sense a touch moving from left to right within a predetermined period of time while characters are input, the controller 200 conducts spacing as shown in FIG. 5A; and, when a touch moving from right to left is sensed, a character preceding the cursor is deleted as shown in FIG. 5B. In other words, if the user moves his/her finger tip on the first input unit 150 rightwards, for example, the controller 200 regards it as a space input; and, if the finger tip is moved leftwards, it is regarded as a backspace input. Similarly, if a touch moving downwards is sensed, the controller 200 may finish the character input process or transmit a message. FIGs. 5A and 5B show how to input characters according to an embodiment of the present invention.

Upon receiving a rotation signal from the rotation detector 190 during character input, the controller 200 unlocks the second input unit 160 and locks the first input unit 150 so that the unlocked second input unit 160 is used to input characters. If the key map 410 has been displayed, the controller 200 hides or removes it.

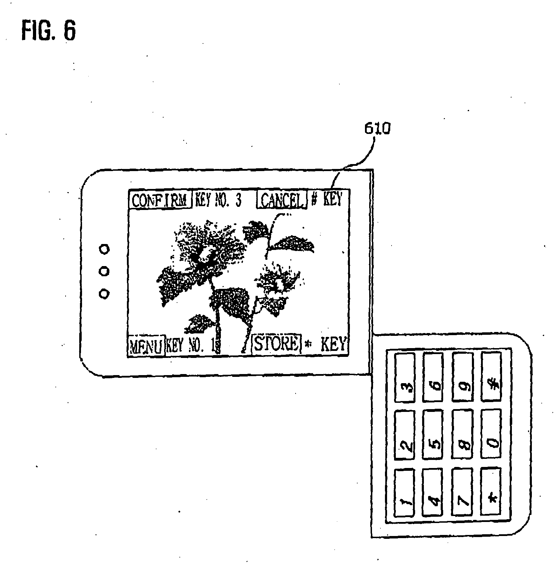

When the controller 200 receives a rotation signal from the rotation detector 190 while the activated first display unit 130 faces in the same direction as the second input unit 160 as shown in FIG. 1B, the controller 200 may unlock the second input unit 160 and lock the first input unit 150, even though there have been no characters input. Then, the controller 200 uses the unlocked second input unit 160 as a navigation key. That is, the second input unit 160 is used to receive application control commands. To this end, the controller 200 may display a key map showing the key number of keys of the second input unit 160, which are necessary for control, together with their functions. For example, FIG. 6 shows a key map 610 informing that, among key buttons of the second input unit 160, keys corresponding to numerals 1 and 3 and signs * and # are used to control the camera photography. FIG. 6 shows how to control functions by using a keypad according to an embodiment of the present invention.

The second input unit 160 may be used to receive control commands even when the key map 610 is not displayed. The key map 610 may be displayed or removed based on a key input from an external input key, such as a side key (not shown).

Upon receiving a non-rotation signal from the rotation detector 190 while the first display unit 130 is activated and the second input unit 160 is used as a navigation key (FIG. 6), the controller 200 unlocks the first input unit 150 and locks the second input unit 160 so that the unlocked first input unit 150 is used as a navigation key as shown in FIG. 1A. If the key map 610 has been displayed, the controller 200 may hide or remove the key map 610.

If the second display unit 140 is activated when the first or second body 110 or 120 is in a non-rotated condition as shown in FIG. 1C (i.e. when a non-rotation signal is received from the rotation detector 190), the controller 200 may unlock the second input unit 160 and lock the first input unit 150. In addition, if the controller 200 receives a rotation signal from the rotation detector 190 as a result of rotation of the first or second body 110 or 120 while the activated second display unit 140 faces in the same direction as the first input unit 150 as shown in FIG. 1D, the controller 200 may unlock the first input unit 150 and lock the second input unit 160.

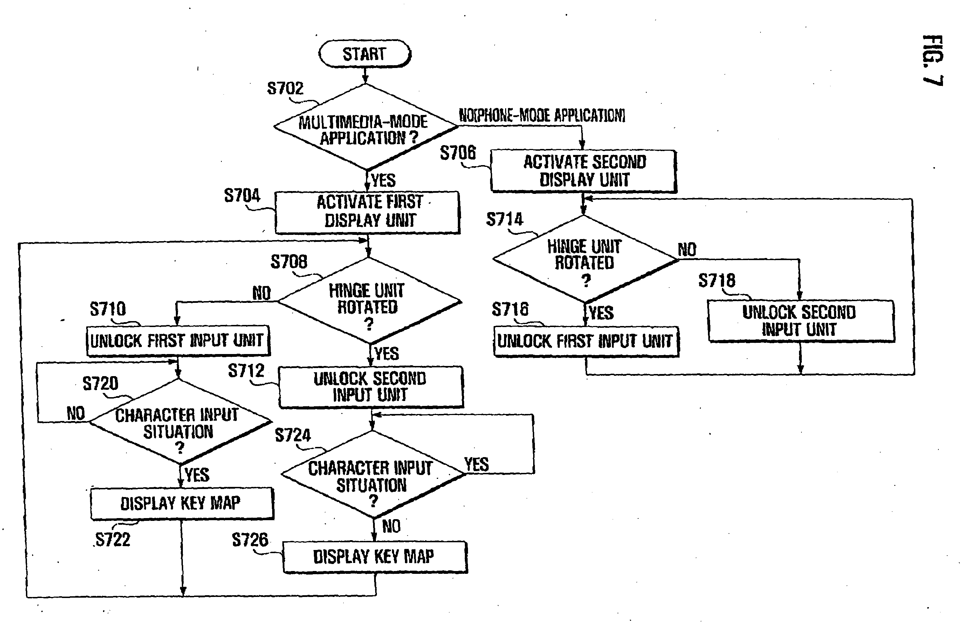

FIG. 7 is a flowchart showing a method for controlling a portable terminal according to an embodiment of the present invention.

Referring to FIG. 7, the method concerns the control of a portable terminal including a first body 110 having two display units on opposite surfaces, respectively, a second body 120 having two input units on opposite surfaces, respectively, and a hinge unit 170 configured as a rotation shaft extending through lateral regions of the first and second bodies 110 and 120, which face each other, in the longitudinal direction of the first body 110 so as to rotatably connect the first and second bodies 110 and 120. The method includes a first step (S702) of identifying the type of a currently run application; a second step (S704,S706) of activating one of the two display units and deactivating the other according to the identified application type; and a third step (S708,5718) of unlocking one of the input units, which is exposed on the same surface as the activated display unit, and locking the other input unit according to whether or not the hinge unit 170 is rotated.

The portable terminal control method according to the present invention may further include steps (S720-S726) for displaying a key map according to whether or not characters are inputted.

More particularly, the controller 200 determines whether an application is run in the multimedia mode or in the phone mode (S702).

If it is determined that the application is run in the multimedia mode, the controller 200 activates the first display unit 130 and deactivates the second display unit 140 (S704).

The controller 200 determines if the hinge unit 170 is rotated (S708). If not, the controller 200 unlocks the first input unit 150, which is exposed on the same surface as the first display unit 130, and locks the second input unit 160 on the opposite surface (S710). The controller 200 monitors the occurrence of a character input situation (S720). If such a situation occurs, the controller 200 displays a key map showing the arrangement of keys of the first input unit 150 together with characters assigned to them so that characters can be input with the first input unit 150 (S722). As mentioned above, characters may also be input with the first input unit 150 even when the key map is not displayed (i.e. step S722 is omissible). The key map may be displayed or removed according to a key input from an external input key, such as a side key (not shown). The key map may be hidden or removed after a predetermined period of time, or after rotation of the hinge unit 170 exposes the first input unit 150 on the same surface as the first display unit 130 and unlocks it. Then, the controller 200 returns to step S708 and locks/unlocks the input units according to whether or not the hinge unit is rotated.

If it has been determined that the hinge unit 170 is rotated (S708), the controller 200 unlocks the second input unit 160, which is exposed on the same surface as the first display unit 130, and locks the first input unit 150 on the opposite surface (S712). The controller 200 monitors the occurrence of a character input situation (S724). If no situation occurs, the controller 200 displays a key map showing the key number of keys of the second input unit 160, which are necessary for control, together with their functions (S726). As mentioned above, characters may also be input with the second input unit 160 even when the key map is not displayed (i.e. step S726 is omissible). The key map may be displayed or removed according to a key input from an external input key, such as a side key (not shown). The key map may be hidden or removed after a predetermined period of time, or after rotation of the hinge unit 170 exposes the first input unit 150 on the same surface as the first display unit 130 and unlocks it. Then, the controller 200 returns to step S708 and locks/unlocks the input units according to whether or not the hinge unit 170 is rotated.

If it has been determined that the application is run in the phone mode (S702), the controller 200 activates the second display unit 140 and deactivates the first display unit 130 (S706).

If it has been determined that the hinge unit 170 is rotated (S714), the controller 200 unlocks the first input unit 150, which is exposed on the same surface as the second display unit 140, and locks the second input unit 160 on the opposite surface (S716). If the hinge unit 170 has not been rotated, the controller 200 unlocks the second input unit 160, which is exposed on the same surface as the second display unit 140, and locks the first input unit 150 on the opposite surface (S718). Then, the controller 200 returns to step S714 and locks/unlocks the input units according to whether or not the hinge unit 170 is rotated.

The first display unit 130 may comprise a QVGA-grade LCD capable of displaying applications in the multimedia mode; and the second display unit 140 may comprise a QCIF-grade LCD capable of displaying applications in the phone mode.

The first input unit 150 may comprise a touchpad having sensors for sensing the user's touch. The sensors may be arranged in a 3×4 matrix type. The first input unit 150 is used as a navigation key, unless characters need to be input.

The second input unit 160 may comprise a keypad having key buttons for inputting numerals, Roman alphabet, Korean alphabet, etc.

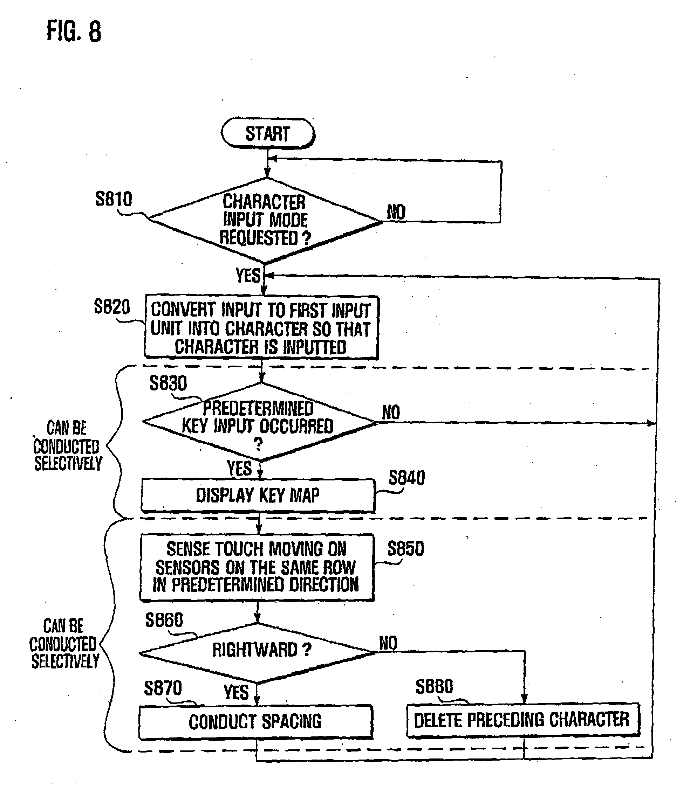

FIG. 8 is a flowchart showing a method for controlling a portable terminal according to another embodiment of the present invention.

Referring to FIG. 8, the method concerns a portable terminal including a first body 110 having a first display unit 130 on a surface and a second display unit 140, which is smaller than the first display unit 130, on the opposite surface; and a second body 120 having a first input unit 150, which comprises sensors for sensing the user's touch, on a surface and a second input unit 160, which comprises a keypad, on the opposite surface. The method includes the steps of determining if a character input mode is requested while the first display unit 130 is activated and the first input unit 150 is unlocked (S810), and switching the first input unit 150 from a navigation key mode to a character input key mode at a request for the character input mode so that, when a sensor of the first input unit 150 senses a touch, the corresponding character is input (S820).

More particularly, the controller 200 monitors a request for a character input mode while the first display unit 130 is activated and the first input unit 150 is unlocked (S810). The character input mode is requested in any situation requiring character input, for example, when a reply to a received message needs to be composed, when an existing or new message needs to be composed, when characters (e.g. search word) need to be input in a cursor region (e.g. search window of wireless Internet), or when a memo needs to be composed/edited.

If it is determined that the character input mode is requested, the controller 200 inputs a character corresponding to one of the sensors of the first input unit 150, which has sensed a touch (S820). In other words, the first input unit 150 switches from the navigation key mode to the character input key mode.

The first display unit 130 may comprise a QVGA-grade LCD supporting a horizontal view function; and the second display unit 140 may comprise a QCIF-grade LCD.

The portable terminal control method according to the present invention may further include the steps of determining if a key input is made by an external key (S830), and displaying a key map having the same arrangement of keys as that of the sensors on the first display unit 130 so as to aid character input (S840).

Particularly, the controller 200 determines if a key input is made by an external key, such as a side key (S830).

If it is determined that a key input is made, the controller 200 display a key map having the same arrangement of keys as that of the sensors (e.g. 3×4 matrix) on the first display unit 130 so as to aid character input (S840). The key map shows at least one input character positioned so as to correspond to each key (sensor). The key map may be hidden or removed after a predetermined period of time or right after character input. Alternatively, the key map may be displayed as soon as a character input situation occurs even if there is no key input. The key map may have the same character arrangement as the keypad of the second input unit 160.

The portable terminal control method according to the present invention may further include the steps of sensing a touch moving on the sensors that are on a same row, in a direction within a predetermined period of time during character input (S850), and conducting spacing if the sensed touch moves from left to right and deleting a character preceding the cursor if the touch moves from right to left (S860-S880).

Particularly, the controller 200 senses a touch moving on sensors of the first input unit 150 that are on a same row, in a direction within a predetermined period of time (S850). For example, this occurs when sensors respectively located at 1^{st} row/1^{st} column, 1^{st} row/2^{nd} column, and 1^{st} row/3^{rd} column successively sense a touch within 1 second.

Then, the controller 200 determines the direction of movement of the sensed touch (S860). If it is determined that the touch moves rightwards, the controller 200 conducts spacing (S870); and, if the touch moves leftwards, the controller deletes a character preceding the cursor (S880).

The process for display a key map when a key input occurs (S830-S840) or the process for controlling character input based on a sensed moving touch (S850-S880) may be selectively conducted in any step according to the user input. For example, the process for controlling character input based on a sensed moving touch (S850-S880) may immediately follow the occurrence of a character input situation (S810); and the process for displaying a key map when a key input occurs (S830-S840) may follow the step of spacing (S870) or deleting a preceding character (S880).

As apparent from the above description, the present invention provides a portable terminal having two display units and two input units adapted so that the display units selectively match the input units according as the bodies rotate, as well as a method for controlling the portable terminal. The present invention has overcome the problems occurring in the prior art, and provides a portable terminal having a smaller size and improved convenience.

In addition, both display units are adapted for convenient use in a multimedia environment and in a phone mode environment, respectively, so that they provide a screen suitable for each necessary function. This improves user convenience.

Furthermore, both input units comprise a touchpad and a keypad, respectively, and are adapted to provide necessary functions according as the bodies rotate or according to the user's selection. This provides the user with both entertainment and satisfaction.

While exemplary embodiments of the present invention have been shown and described in this specification, it will be understood by those skilled in the art that various changes or modifications of the embodiments are possible without departing from the scope of the invention as defined by the appended claims.

## Claims

1. A portable terminal comprising:
a first body (110) having a first display unit (130) and a second display unit (140) respectively on a first surface and a second surface of the first body, the second surface opposite the first surface;
a second body (120) having a first input unit (150) and a second input unit (160) respectively on a top surface and a bottom surface of the second body, the bottom surface opposite the top surface;
a hinge unit (170) configured as a rotation shaft extending through lateral regions of the first and second bodies, the lateral regions facing each other, in a longitudinal direction of the first body so as to rotatably connect the first and second bodies;
a rotation detector (190) for detecting rotation of the hinge unit; and
a controller (200) adapted to activate one of the input units facing in a same direction as an activated one of the display units and lock the other input unit based on an output from the rotation detector.

2. The portable terminal as claimed in claim 1, wherein: the first display unit (130) is to display an execution screen in a multimedia mode; and
the second display unit (140) is to display an execution screen in a phone mode, the second display unit having a screen size smaller than a screen size of the first display unit.

3. The portable terminal as claimed in claim 2, wherein the first body (110) further comprises a third input unit (180) positioned on the second surface so as to control functions.

4. The portable terminal as claimed in claim 2, wherein the controller (200) is adapted to activate one of the first and second display units and deactivate the other display unit according to a mode of an executed application.

5. The portable terminal as claimed in claim 4, wherein the controller (200) is adapted to unlock one of the input units exposed on a same surface as the activated display unit and lock the other display unit.

6. The portable terminal as claimed in claim 5, wherein the controller (200) is adapted to switch a locked/unlocked condition of the input units based on a signal output by the rotation detector (190).

7. The portable terminal as claimed in claim 6, wherein the rotation detector (190) is adapted to output a rotation signal informing of a rotated condition, when rotation of at least one of the first and second bodies causes rotation of the hinge unit (170) in a first direction, and output a non-rotation signal informing of a non-rotated condition when rotation of at least one of the first and second bodies causes rotation of the hinge unit in a second direction opposite the first direction.

8. The portable terminal as claimed in claim 7, wherein :
the first input unit (150) comprises a touchpad having sensors for sensing a touch of a user; and
the second input unit (160) comprises a keypad having key buttons for character input

9. The portable terminal as claimed in claim 8, wherein the controller (200) is adapted to unlock the first input unit and lock the second input unit when the first display unit is activated and after the non-rotation signal is received from the rotation detector.

10. The portable terminal as claimed in claim 9, wherein the first input unit (150) is adapted to be used as a navigation key when the first input unit faces in a same direction as the first display unit after the first display unit is activated.

11. The portable terminal as claimed in claim 8, wherein the controller (200) is adapted to unlock the second input unit and lock the first input unit when the first display unit is activated and after the rotation signal is received from the rotation detector (190) whereas,
the controller is adapted to unlock the first input unit and lock the second input unit so that the unlocked first input unit is usable as a navigation key when the first display unit is activated and after the non-rotation signal is received from the rotation detector.

12. The portable terminal as claimed in claim 8, wherein the controller (200) is adapted to unlock the second input unit and lock the first input unit when the second display unit is activated and after a non-rotation signal is received from the rotation detector (190) whereas
the controller is adapted to unlock the first input unit and lock the second input unit when the second display unit is activated and after a rotation signal is received from the rotation detector.

13. The portable terminal as claimed in claim 1, wherein the controller (200) is adapted to convert an input to the first input unit (150) into a character assigned to a sensor at a corresponding location so that the character is inputted when a request for a character input mode is received while the first display unit is activated and the first input unit is unlocked.

14. The portable terminal as claimed in claim 13, wherein the controller (200) is adapted to display a key map on the first display unit, the key map having an identical 3×4 matrix type as the sensors so that characters can be input.

15. The portable terminal as claimed in claim 13, wherein the controller (200) is adapted to conduct spacing when sensors on a same row sense a touch moving from left to right within a predetermined period of time while characters are input and
the controller is adapted to delete a character preceding a cursor when sensors on a same row sense a touch moving from right to left within a predetermined period of time while characters are input.

16. A method for controlling a portable terminal incorporating a first body (110) having a first display unit (130) and a second display unit (140) respectively on a first surface and a second surface of the first body, the second surface opposite the first surface; a second body (120) having a first input unit (150) and a second input unit (160) respectively on a top surface and a bottom surface of the second body, the bottom surface opposite the top surface; and a hinge unit (170) configured as a rotation shaft extending through lateral regions of the first and second bodies, the lateral surfaces facing each other, in a longitudinal direction of the first body so as to rotatably connect the first and second bodies, the method comprising:
identifying a type of an executed application;
activating one of the display units and deactivating the other display unit according to the identified type of the executed application; and
unlocking one of the input units exposed on an identical surface as the activated display unit and locking the other input unit according to a rotation condition of the hinge unit.

17. The method as claimed in claim 16, wherein the activating comprises:
activating the first display unit (130) and deactivating the second display unit (140) when the application is executed in the multimedia mode; and
activating the second display unit and deactivating the first display unit when the application is executed in the phone mode.

18. The method as claimed in claim 17, wherein the unlocking comprises unlocking the first input unit (150) exposed on an identical surface as the first display unit (130) and locking the second input unit (160) when the first display unit is activated and the hinge unit (170) is in a non-rotated condition.

19. The method as claimed in claim 18, wherein the first input unit (150) is used as a navigation key.

20. The method as claimed in claim 17, wherein the unlocking comprises unlocking the second input unit (160) exposed on an identical surface as the first display unit (130) and locking the first input unit (150) when the first display unit (130) is activated and the hinge unit (170) is in a rotated condition.

21. The method as claimed in claim 17, wherein the unlocking comprises unlocking the second input unit (160) exposed on an identical surface as the second display unit (140) and locking the first input unit (150) when the second display unit (140) is activated and the hinge unit (170) is in a non-rotated condition.

22. The method as claimed in claim 17, wherein the unlocking comprises unlocking the first input unit (150) exposed on an identical surface as the second display unit (140) and locking the second input unit (160) when the second display unit is activated and the hinge unit (170) is in a rotated condition.

23. The method as claimed in claim 16, further comprising:
monitoring a request for a character input mode while the first display unit (130) is activated and the first input unit (150) is unlocked; and
switching the first input unit from a navigation key mode to a character input key mode at a request for the character input mode so that, based on an input to the first input unit, a character assigned to a sensor at a corresponding location is input.

24. The method as claimed in claim 23, which further comprises:
monitoring a key input from an external key; and
displaying a key map on the first display unit (130), the key map having an identical arrangement as the sensors so that characters can be input.

25. The method as claimed in claim 23, which further comprises:
sensing a touch moving in a direction within a predetermined period of time by sensors on a same row while characters are input; and
conducting spacing when the sensed touch moves from left to right and deleting a character preceding a cursor when the sensed touch moves from right to left.

## Patentansprüche

1. Tragbares Endgerät, das Folgendes umfasst:
ein erstes Gehäuseteil (110) mit einer ersten Anzeigeeinheit (130) und einer zweiten Anzeigeeinheit (140) jeweils auf einer ersten Fläche und einer zweiten Fläche des ersten Gehäuseteils, wobei die zweite Fläche der ersten Fläche gegenüber liegt;
ein zweites Gehäuseteil (120) mit einer ersten Eingabeeinheit (150) und einer zweiten Eingabeeinheit (160) jeweils auf einer Oberseite und einer Unterseite des zweiten Gehäuseteils, wobei die Unterseite der Oberseite gegenüber liegt;
eine Gelenkvorrichtung (170), die als Drehwelle konfiguriert ist, die sich durch laterale Regionen des ersten und zweiten Gehäuseteils, wobei die lateralen Regionen einander zugewandt sind, in einer Längsrichtung des ersten Gehäuseteils erstreckt, so dass sie das erste und zweite Gehäuseteil schwenkbar miteinander verbindet;
einen Schwenkdetektor (190) zum Erkennen einer Schwenkung der Gelenkvorrichtung; und
eine Steuerung (200), die zum Aktivieren einer der Eingabeeinheiten, die in dieselbe Richtung weist wie eine der aktivierten Anzeigeeinheiten, und zum Sperren der anderen Eingabeeinheit auf der Basis einer Ausgabe von dem Schwenkdetektor dient.

2. Tragbares Endgerät nach Anspruch 1, wobei die erste Anzeigeeinheit (130) zum Anzeigen eines Ausführungsschirms in einem Multimedia-Modus dient; und
die zweite Anzeigeeinheit (140) zum Anzeigen eines Ausführungsschirms in einem Telefonmodus dient, wobei die zweite Anzeigeeinheit eine Bildschirmgröße hat, die geringer ist als eine Bildschirmgröße der ersten Anzeigeeinheit.

3. Tragbares Endgerät nach Anspruch 2, wobei das erste Gehäuseteil (110) ferner eine dritte Eingabeeinheit (180) umfasst, die auf der zweiten Fläche positioniert ist, um Funktionen zu steuern.

4. Tragbares Endgerät nach Anspruch 2, wobei die Steuerung (200) zum Aktivieren der ersten oder der zweiten Anzeigeeinheit und zum Deaktivieren der anderen Anzeigeeinheit gemäß einem Modus einer ausgeführten Anwendung dient.

5. Tragbares Endgerät nach Anspruch 4, wobei die Steuerung (200) zum Freigeben der Eingabeeinheit, die auf derselben Fläche exponiert ist wie die aktivierte Anzeigeeinheit, und zum Sperren der anderen Anzeigeeinheit dient.

6. Tragbares Endgerät nach Anspruch 5, wobei die Steuerung (200) die Aufgabe hat, einen gesperrten/freigegebenen Zustand der Eingabeeinheiten auf der Basis einer Signalausgabe durch den Schwenkdetektor (190) umzuschalten.

7. Tragbares Endgerät nach Anspruch 6, wobei der Rotationsdetektor (190) die Aufgabe hat, ein Schwenksignal auszugeben, das über einen geschwenkten Zustand informiert, wenn eine Rotation des ersten und/oder des zweiten Gehäuseteils eine Schwenkung der Gelenkvorrichtung (170) in einer ersten Richtung bewirkt, und ein Nichtschwenksignal auszugeben, das über einen nicht geschwenkten Zustand informiert, wenn eine Schwenkung des ersten und/oder des zweiten Gehäuseteils eine Schwenkung der Gelenkvorrichtung in einer zweiten Richtung entgegengesetzt zur ersten Richtung bewirkt.

8. Tragbares Endgerät nach Anspruch 7, wobei:
die erste Eingabeeinheit (150) ein Touchpad mit Sensoren zum Erfassen einer Berührung durch einen Benutzer umfasst; und
die zweite Eingabeeinheit (160) eine Tastatur mit Tasten zur Zeicheneingabe umfasst.

9. Tragbares Endgerät nach Anspruch 8, wobei die Steuerung (200) die Aufgabe hat, die erste Eingabeeinheit freizugeben und die zweite Eingabeeinheit zu sperren, wenn die erste Anzeigeeinheit aktiviert ist und nachdem das Nichtschwenksignal vom Schwenkdetektor empfangen wird.

10. Tragbares Endgerät nach Anspruch 9, wobei die erste Eingabeeinheit (150) für die Verwendung als Navigationstaste gestaltet ist, wenn die Eingabeeinheit in dieselbe Richtung zeigt wie die erste Anzeigeeinheit, nachdem die erste Anzeigeeinheit aktiviert ist.

11. Tragbares Endgerät nach Anspruch 8, wobei die Steuerung (200) die Aufgabe hat, die zweite Eingabeeinheit freizugeben und die erste Eingabeeinheit zu sperren, wenn die erste Anzeigeeinheit aktiviert ist und nachdem das Schwenksignal vom Schwenkdetektor (190) empfangen wird, während
die Steuerung die Aufgabe hat, die erste Eingabeeinheit freizugeben und die zweite Eingabeeinheit zu sperren, so dass die freigegebene erste Eingabeeinheit als Navigationstaste verwendet werden kann, wenn die erste Anzeigeeinheit aktiviert ist und nachdem das Nichtschwenksignal vom Schwenkdetektor empfangen wird.

12. Tragbares Endgerät nach Anspruch 8, wobei die Steuerung (200) die Aufgabe hat, die zweite Eingabeeinheit freizugeben und die erste Eingabeeinheit zu sperren, wenn die zweite Anzeigeeinheit aktiviert ist und nachdem ein Nichtschwenksignal vom Schwenkdetektor (190) empfangen wird, während
die Steuerung die Aufgabe hat, die erste Eingabeeinheit freizugeben und die zweite Eingabeeinheit zu sperren, wenn die zweite Anzeigeeinheit aktiviert ist und nachdem ein Schwenksignal vom Schwenkdetektor empfangen wird.

13. Tragbares Endgerät nach Anspruch 1, wobei die Steuerung (200) die Aufgabe hat, eine Eingabe in die erste Eingabeeinheit (150) in ein Zeichen, das einem Sensor an einem entsprechenden Ort zugeordnet ist, umzuwandeln, so dass das Zeichen eingegeben wird, wenn eine Zeicheneingabemodus-Anforderung empfangen wird, während die erste Anzeigeeinheit aktiviert ist und die erste Eingabeeinheit freigegeben ist.

14. Tragbares Endgerät nach Anspruch 13, wobei die Steuerung (200) die Aufgabe hat, eine Keymap auf der ersten Anzeigeeinheit anzuzeigen, wobei die Keymap einen identischen 3x4 Matrixtyp wie die Sensoren hat, so dass Zeichen eingegeben werden können.

15. Tragbares Endgerät nach Anspruch 13, wobei die Steuerung (200) die Aufgabe hat, einen Abstand zu veranlassen, wenn Sensoren in derselben Reihe eine Berührungsbewegung von links nach rechts innerhalb einer vorbestimmten Zeitperiode während der Eingabe von Zeichen erfassen, und
die Steuerung die Aufgabe hat, ein Zeichen vor einem Cursor zu löschen, wenn Sensoren in derselben Reihe eine Berührungsbewegung von rechts nach links innerhalb einer vorbestimmten Zeitperiode während der Eingabe von Zeichen erfassen.

16. Verfahren zum Steuern eines tragbaren Endgeräts, das Folgendes umfasst: ein erstes Gehäuseteil (110) mit einer ersten Anzeigeeinheit (130) und einer zweiten Anzeigeeinheit (140) jeweils auf einer ersten Fläche und einer zweiten Fläche des ersten Gehäuseteils, wobei die zweite Fläche gegenüber der ersten Fläche liegt; ein zweites Gehäuseteil (120) mit einer ersten Eingabeeinheit (150) und einer zweiten Eingabeeinheit (160) jeweils auf einer Oberseite und einer Unterseite des zweiten Gehäuseteils, wobei die Unterseite gegenüber der Oberseite liegt; und eine Gelenkvorrichtung (170), die als Drehwelle konfiguriert ist, die sich durch laterale Regionen des ersten und des zweiten Gehäuseteils, wobei die lateralen Flächen einander zugewandt sind, in einer Längsrichtung des ersten Gehäuseteils erstreckt, so dass sie das erste und zweite Gehäuseteil schwenkbar miteinander verbindet, wobei das Verfahren Folgendes beinhaltet:
Identifizieren eines Typs einer ausgeführten Anwendung;
Aktivieren einer der Anzeigeeinheiten und Deaktivieren der anderen Anzeigeeinheit gemäß dem identifizierten Typ der ausgeführten Anwendung; und
Freigeben einer der Eingabeeinheiten, die auf einer identischen Fläche exponiert ist wie die aktivierte Anzeigeeinheit, und Sperren der anderen Eingabeeinheit gemäß einem Schwenkzustand der Gelenkvorrichtung.

17. Verfahren nach Anspruch 16, wobei das Aktivieren Folgendes beinhaltet:
Aktivieren der ersten Anzeigeeinheit (130) und Deaktivieren der zweiten Anzeigeeinheit (140), wenn die Anwendung im Multimedia-Modus ausgeführt wird; und
Aktivieren der zweiten Anzeigeeinheit und Deaktivieren der ersten Anzeigeeinheit, wenn die Anwendung im Telefonmodus ausgeführt wird.

18. Verfahren nach Anspruch 17, wobei das Freigeben das Freigeben der ersten Eingabeeinheit (150), die auf einer identischen Fläche wie die erste Anzeigeeinheit (130) exponiert ist, und das Sperren der zweiten Eingabeeinheit (160) beinhaltet, wenn die erste Anzeigeeinheit aktiviert und die Gelenkvorrichtung (170) in einem nichtgeschwenkten Zustand ist.

19. Verfahren nach Anspruch 18, wobei die erste Eingabeeinheit (150) als Navigationstaste verwendet wird.

20. Verfahren nach Anspruch 17, wobei das Freigeben das Freigeben der zweiten Eingabeeinheit (160), die auf einer identischen Fläche exponiert ist wie die erste Anzeigeeinheit (130), und das Sperren der ersten Eingabeeinheit (150) beinhaltet, wenn die erste Anzeigeeinheit (130) aktiviert ist und die Gelenkvorrichtung (170) in einem geschwenkten Zustand ist.

21. Verfahren nach Anspruch 17, wobei das Freigeben das Freigeben der zweiten Anzeigeeinheit (140), die auf einer identischen Fläche exponiert ist wie die zweite Eingabeeinheit (160), und das Sperren der ersten Eingabeeinheit (150) beinhaltet, wenn die zweite Anzeigeeinheit (140) aktiviert ist und die Gelenkvorrichtung (170) in einem nichtgeschwenkten Zustand ist.

22. Verfahren nach Anspruch 17, wobei das Freigeben das Freigeben der ersten Eingabeeinheit (150), die auf einer identischen Fläche exponiert ist wie die zweite Anzeigeeinheit (140), und das Sperren der zweiten Eingabeeinheit (160) beinhaltet, wenn die zweite Anzeigeeinheit aktiviert ist und die Gelenkvorrichtung (170) in einem geschwenkten Zustand ist.

23. Verfahren nach Anspruch 16, das ferner Folgendes beinhaltet:
Überwachen einer Zeicheneingabemodus-Anforderung, während die erste Anzeigeeinheit (130) aktiviert ist und die erste Eingabeeinheit (150) freigegeben ist; und
Umschalten der ersten Eingabeeinheit von einem Navigationstastenmodus in einen Zeicheneingabetastenmodus auf eine Zeicheneingabemodus-Anforderung hin, so dass auf der Basis einer Eingabe in die erste Eingabeeinheit ein Zeichen, das einem Sensor an einem entsprechenden Ort zugewiesen ist, eingegeben wird.

24. Verfahren nach Anspruch 23, das ferner Folgendes beinhaltet:
Überwachen einer Tasteneingabe von einer externen Taste; und
Anzeigen einer Keymap auf der ersten Anzeigeeinheit (130), wobei die Keymap eine identische Anordnung wie die Sensoren hat, so dass Zeichen eingegeben werden können.

25. Verfahren nach Anspruch 23, das ferner Folgendes beinhaltet:
Erfassen einer Berührungsbewegung in einer Richtung innerhalb einer vorbestimmten Zeitperiode durch Sensoren in derselben Reihe während der Eingabe von Zeichen; und
Veranlassen eines Abstands, wenn die erfasste Berührungsbewegung von links nach rechts geht, und Löschen eines Zeichens vor einem Cursor, wenn die erfasste Berührung von rechts nach links geht.

## Revendications

1. Terminal portable comprenant :
un premier corps (110) ayant un premier afficheur (130) et un deuxième afficheur (140) respectivement sur une première surface et une deuxième surface du premier corps, la deuxième surface se trouvant du côté opposé à la première surface ;
un deuxième corps (120) possédant une première unité de saisie (150) et une deuxième unité de saisie (160) respectivement sur une surface supérieure et une surface inférieure du deuxième corps, la surface inférieure se trouvant du côté opposé à la surface supérieure ;
une unité d'articulation (170) laquelle est configurée sous forme d'axe de rotation s'étendant à travers des zones latérales des premier et deuxième corps, les zones latérales se faisant face l'une l'autre, suivant un sens longitudinal du premier corps de sorte à raccorder de façon rotative les premier et deuxième corps ;
un détecteur de rotation (190) pour détecter la rotation de l'unité d'articulation ; et
un contrôleur (200) lequel est conçu pour activer l'une des unités de saisie dirigée dans un même sens qu'un afficheur activé parmi les afficheurs et pour verrouiller l'autre unité de saisie sur la base d'une sortie provenant du détecteur de rotation.

2. Terminal portable selon la revendication 1, le premier afficheur (130) étant destiné à afficher un écran d'exécution dans un mode Multimédias ; et
le deuxième afficheur (140) étant destiné à afficher un écran d'exécution dans un mode Téléphone, le deuxième afficheur ayant une taille d'écran qui est plus petite que la taille d'écran du premier afficheur.

3. Terminal portable selon la revendication 2, le premier corps (110) comprenant en outre une troisième unité de saisie (180) qui est positionnée sur la deuxième surface de sorte à assurer le pilotage des fonctions.

4. Terminal portable selon la revendication 2, le contrôleur (200) étant conçu pour activer l'un des afficheurs, à savoir le premier et le deuxième, et pour désactiver l'autre afficheur en fonction d'un mode d'une application qui est exécutée.

5. Terminal portable selon la revendication 4, le contrôleur (200) étant conçu pour déverrouiller l'une des unités de saisie exposée sur une même surface que l'afficheur activé et pour verrouiller l'autre afficheur.

6. Terminal portable selon la revendication 5, le contrôleur (200) étant conçu pour permuter un état verrouillé/déverrouillé des unités de saisie sur la base d'une sortie de signal produite par le détecteur de rotation (190).

7. Terminal portable selon la revendication 6, le détecteur de rotation (190) étant conçu pour produire un signal de rotation destiné à notifier un état "tourné" lorsque la rotation de l'un au moins des corps, à savoir le premier et le deuxième, provoque la rotation de l'unité d'articulation (170) dans un premier sens, et pour produire un signal de non rotation destiné à notifier un état "non tourné" lorsque la rotation de l'un au moins des corps, à savoir le premier et le deuxième, provoque la rotation de l'unité d'articulation dans un deuxième sens lequel est opposé au premier sens.

8. Terminal portable selon la revendication 7,
la première unité de saisie (150) comprenant un pavé tactile avec des capteurs pour détecter le toucher d'un utilisateur ; et
la deuxième unité de saisie (160) comprenant un clavier avec des boutons pour la saisie des caractères.

9. Terminal portable selon la revendication 8, le contrôleur (200) étant conçu pour déverrouiller la première unité de saisie et pour verrouiller la deuxième unité de saisie lorsque le premier afficheur est activé et après que le signal de non rotation est reçu en provenance du détecteur de rotation.

10. Terminal portable selon la revendication 9, la première unité de saisie (150) étant conçue pour être utilisée en tant que touche de navigation lorsque la première unité de saisie est dirigée dans le même sens que le premier afficheur une fois que le premier afficheur a été activé.

11. Terminal portable selon la revendication 8, le contrôleur (200) étant conçu pour déverrouiller la deuxième unité de saisie et pour verrouiller la première unité de saisie lorsque le premier afficheur est activé et après que le signal de rotation est reçu en provenance du détecteur de rotation (190), alors que
le contrôleur est conçu pour déverrouiller la première unité de saisie et pour verrouiller la deuxième unité de saisie de sorte que la première unité de saisie déverrouillée soit utilisable en tant que touche de navigation lorsque le premier afficheur est activé et après que le signal de non rotation est reçu en provenance du détecteur de rotation.

12. Terminal portable selon la revendication 8, le contrôleur (200) étant conçu pour déverrouiller la deuxième unité de saisie et pour verrouiller la première unité de saisie lorsque le deuxième afficheur est activé et après qu'un signal de non rotation est reçu en provenance du détecteur de rotation (190), alors que
le contrôleur est conçu pour déverrouiller la première unité de saisie et pour verrouiller la deuxième unité de saisie lorsque le deuxième afficheur est activé et après qu'un signal de rotation est reçu en provenance du détecteur de rotation.

13. Terminal portable selon la revendication 1, le contrôleur (200) étant conçu pour convertir une saisie faite sur la première unité de saisie (150) en un caractère attribué à un capteur au niveau d'un emplacement correspondant de sorte que le caractère est saisi lorsqu'une demande pour un mode de saisie Caractères est reçue pendant que le premier afficheur est activé et que la première unité de saisie est déverrouillée.

14. Terminal portable selon la revendication 13, le contrôleur (200) étant conçu pour afficher une disposition de clavier sur le premier afficheur, la disposition de clavier ayant un type de matrice 3x4 identique aux capteurs de sorte à permettre la saisie de caractères.

15. Terminal portable selon la revendication 13, le contrôleur (200) étant conçu pour réaliser un espacement lorsque des capteurs sur une même rangée détectent le toucher tactile qui se déplace de gauche à droite dans les limites d'un intervalle de temps prédéterminé pendant que des caractères sont saisis, et
le contrôleur est conçu pour effacer un caractère qui précède un curseur lorsque des capteurs sur une même rangée détectent un toucher tactile qui se déplace de droite à gauche dans les limites d'un intervalle de temps prédéterminé pendant que des caractères sont saisis.

16. Procédé de commande d'un terminal portable incorporant un premier corps (110) ayant un premier afficheur (130) et un deuxième afficheur (140) respectivement sur une première surface et une deuxième surface du premier corps, la deuxième surface se trouvant du côté opposé à la première surface ; un deuxième corps (120) possédant une première unité de saisie (150) et une deuxième unité de saisie (160) respectivement sur une surface supérieure et une surface inférieure du deuxième corps, la surface inférieure se trouvant du côté opposé à la surface supérieure ; et une unité d'articulation (170) laquelle est configurée sous forme d'axe de rotation s'étendant à travers des zones latérales des premier et deuxième corps, les zones latérales se faisant face l'une l'autre, suivant un sens longitudinal du premier corps de sorte à raccorder de façon rotative les premier et deuxième corps, le procédé comprenant les opérations consistant à :
identifier un type d'application qui est exécutée ;
activer l'un des afficheurs et à désactiver l'autre afficheur, en fonction du type identifié de l'application qui est exécutée ; et
déverrouiller l'une des unités de saisie exposées sur une surface identique à celle de l'afficheur activé et verrouiller l'autre unité de saisie en fonction d'un état de rotation de l'unité d'articulation.

17. Procédé selon la revendication 16, l'activation comprenant les opérations consistant à :
activer le premier afficheur (130) et désactiver le deuxième afficheur (140) lorsque l'application est exécutée dans le mode Multimédias ; et
activer le deuxième afficheur et désactiver le premier afficheur lorsque l'application est exécutée dans le mode Téléphone.

18. Procédé selon la revendication 17, le déverrouillage comprenant les opérations consistant à déverrouiller la première unité de saisie (150) exposée sur une surface identique à celle du premier afficheur (130) et à verrouiller la deuxième unité de saisie (160) lorsque le premier afficheur est activé et que l'unité d'articulation (170) se trouve dans un état "non tourné".

19. Procédé selon la revendication 18, la première unité de saisie (150) étant utilisée en tant que touche de navigation.

20. Procédé selon la revendication 17, le déverrouillage comprenant les opérations consistant à déverrouiller la deuxième unité de saisie (160) exposée sur une surface identique à celle du premier afficheur (130) et à verrouiller la première unité de saisie (150) lorsque le premier afficheur (130) est activé et que l'unité d'articulation (170) se trouve dans un état "tourné".

21. Procédé selon la revendication 17, le déverrouillage comprenant les opérations consistant à déverrouiller la deuxième unité de saisie (160) exposée sur une surface identique à celle du deuxième afficheur (140) et à verrouiller la première unité de saisie (150) lorsque le deuxième afficheur (140) est activé et que l'unité d'articulation (170) se trouve dans un état "non tourné".

22. Procédé selon la revendication 17, le déverrouillage comprenant les opérations consistant à déverrouiller la première unité de saisie (150) exposée sur une surface identique à celle du deuxième afficheur (140) et à verrouiller la deuxième unité de saisie (160) lorsque le deuxième afficheur est activé et que l'unité d'articulation (170) se trouve dans un état "tourné".

23. Procédé selon la revendication 16, comprenant en outre les opérations consistant à :
surveiller une demande pour un mode de saisie Caractères pendant que le premier afficheur (130) est activé et que la première unité de saisie (150) est déverrouillée ; et
permuter la première unité de saisie pour la faire passer d'un mode Touche de navigation à un mode Touche de saisie de caractères lors d'une demande pour le mode de saisie Caractères de sorte que, sur la base d'une saisie faite sur la première unité de saisie, un caractère attribué à un capteur au niveau d'un emplacement correspondant est saisi.

24. Procédé selon la revendication 23, qui comprend en outre les opérations consistant à :
surveiller une saisie par clavier à partir d'une touche externe ; et
afficher une disposition de clavier sur le premier afficheur (130), la disposition de clavier ayant un agencement identique aux capteurs de sorte à permettre la saisie de caractères.

25. Procédé selon la revendication 23, qui comprend en outre les opérations consistant à :
détecter un toucher tactile qui se déplace suivant un certain sens dans les limites d'un intervalle de temps prédéterminé par des capteurs sur une même rangée pendant que des caractères sont saisis ; et
réaliser un espacement lorsque le toucher tactile détecté se déplace de gauche à droite et effacer un caractère qui précède un curseur lorsque le toucher tactile détecté se déplace de droite à gauche.
